(19) Europäisches Patentamt
European Patent Office
Office européen des brevets

(11) Publication number: **0 073 044**
**B1**

# (12) EUROPEAN PATENT SPECIFICATION

(45) Date of publication of patent specification: **30.12.86**

(51) Int. Cl.$^4$: **H 01 M 8/04,** H 01 M 8/08

(21) Application number: **82107655.1**

(22) Date of filing: **20.08.82**

## (54) Fuel cell battery using acidic electrolyte.

(30) Priority: **21.08.81 JP 130316/81**

(43) Date of publication of application:
**02.03.83 Bulletin 83/09**

(45) Publication of the grant of the patent:
**30.12.86 Bulletin 86/52**

(84) Designated Contracting States:
**CH DE FR GB IT LI NL SE**

(56) References cited:
**DE-B-2 533 215**
**US-A-3 935 028**
**US-A-3 992 223**
**US-A-4 160 856**
**US-A-4 169 917**

(73) Proprietor: **Hitachi, Ltd.**
**5-1, Marunouchi 1-chome**
**Chiyoda-ku Tokyo 100 (JP)**

(72) Inventor: **Tsukui, Tsutomu**
**146-25, Ishinazaka-cho**
**Hitachi-shi Ibaraki-ken (JP)**
Inventor: **Shimizu, Toshio**
**3473-3, Higashiishikawa**
**Katsuta-shi Ibaraki-ken (JP)**
Inventor: **Doi, Ryouta**
**308-2, Minamigo Nukata Naka-machi**
**Naka-gun Ibaraki-ken (JP)**

(74) Representative: **Strehl, Peter, Dipl.-Ing. et al**
**Strehl, Schübel-Hopf, Schulz Patentanwälte**
**Widenmayerstrasse 17 Postfach 22 03 45**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 073 044 B1**

Courier Press, Leamington Spa, England.

**Description**

Background of the invention

(1) Field of the invention

This invention relates to a method of operating a fuel cell battery using an acidic electrolyte as the electrolyte. More particularly, the present invention relates to a method of controlling the flow rate of air to be supplied to an oxidant electrode and discharging carbon dioxide gas generated on a fuel electrode in order to suitably discharge the water generated on the oxidant electrode.

(2) Description of the prior art

A fuel cell battery generally, as well known, consists of a fuel electrode, an oxidant electrode and an electrolyte disposed between these electrodes and includes a fuel chamber for feeding fuel to the fuel electrode in combination with an air chamber for feeding an oxidant to the oxidant electrode. (The negative electrode is generally referred to as an "air electrode" because a gas containing oxygen, particularly air, is generally employed.)

U.S.P. Nos. 3,935,028, 3,992,223, 4,160,856 and other disclose a fuel cell battery operating at a temperature near room temperature which uses an alkali electrolyte. When methanol is used as the fuel, the cell reaction can be expressed by the formulas:

At the air electrode:

$$2O_2+4H_2O+8e \rightarrow 8OH^- \qquad (1)$$

At the fuel electrode:

$$CH_3OH+8OH^- \rightarrow CO_3^{2-}+6H_2O+8e \qquad (2)$$

According to the cell reaction expressed as above, water is consumed on the oxidant electrode in accordance with formula (1). Hence, it is necessary to prevent the evaporation of water by limiting the flow rate of the air to the amount required as the oxidant.

Among fuel cell batteries using an acidic electrolyte (phosphoric acid), there is a hydrogen-oxygen fuel cell battery which is operated at a high temperature (190°C or above). The cell reaction of this type is expressed by the following formulas:

At the fuel electrode:

$$H_2 \rightarrow 2H^+-2e \qquad (3)$$

At the oxidant electrode:

$$\tfrac{1}{2}O_2+2H^+-2e \rightarrow H_2O \qquad (4)$$

Accordingly, water is generated on the oxidant electrode as expressed by the formula (4).

As will be described elsewhere, however, the saturated vapor pressure of the air to be fed as the oxidant is high because the temperature is high, and the air may be fed only in amounts necessary as the oxidant.

As described above, it has been necessary conventionally to feed the air as the oxidant which is necessary for generating the power at the oxidant electrode.

If the fuel cell battery using an acidic electrolyte is operated near the normal temperature, the air required for discharging the resulting water must be fed to the oxidant electrode besides the air which is necessary as the oxidant for the power generation.

Unless the resulting water is discharged, it accumulates on the surface of the oxidant electrode and prevents air from reaching the electrode so that the oxidation reaction cannot proceed and the cell performance is reduced.

Though a fuel cell battery using an acidic electrolyte which is to be operated near the normal temperature has been examined in the past, no examination about the amount of air to be fed to the oxidant electrode has been disclosed.

On the other hand, in fuel cell batteries for direct power generation which use a liquid such as methanol or hydrazine as the fuel, carbon dioxide gas or nitrogen gas is generated as a result of the chemical reaction on the fuel electrode and the resulting gas is exhausted into a fuel chamber adjacent the fuel electrode lest the resulting gas covers the surface of the fuel electrode and inhibits the supply of the fuel to the fuel electrode. There are two known methods of discharging the resulting gas from the fuel chamber outside the battery. According to a first method, an opening is bored at the upper part of the fuel chamber. The second circulates the fuel inside the fuel chamber or a liquid mixture of the fuel and the electrolyte by means of a pump or the like disposed outside the battery. The second method also takes the resulting gas out from the fuel chamber together with the liquid mixture of the fuel and the electrolyte and discharges the mixture outside the battery from a gas separator disposed in the circulation path. In the first method, the battery can not be used in all postures because the opening is defined at the upper part of the fuel chamber. The second method has the drawbacks that a pump is necessary for circulating the liquid mixture of the fuel and electrolyte and the separator for separating the resulting gas from the liquid mixture of the fuel and electrolyte must be disposed in the circulation system for the liquid mixture.

Summary of the invention

It is an object of the present invention to provide a fuel cell battery equipped with means for controlling the optimal air flow rate to the oxidant electrode in order to operate the battery with a high level of performance.

In a fuel cell battery which includes an acidic electrolyte and in which the cell reaction is carried out at a temperature of 100°C or below by feeding a gas containing oxygen to the oxidant electrode,

the gist of the present invention resides in a fuel cell battery in which the vapor pressure and flow rate of the gas containing oxygen fed to the oxidant electrode are controlled to a level sufficient but not excessive for discharging the water generated on the oxidant electrode by the battery reaction from the oxidant electrode.

Besides the water content adjusting function described above, the fuel cell battery in accordance with the present invention eliminates the resulting water that is generated as a result of the electro-chemical reaction. Further, the fuel cell battery eliminates the resulting gas that would prevent the supply of fuel to the fuel electrode, which would thus result in a lowering in the battery performance due to the fuel shortage. The fuel cell battery of the invention may also include a resulting gas separation layer inside or bordering the fuel chamber as a means for sealing the fuel chamber without circulating the fuel or a mixture of the fuel and the electrolyte, and discharges the resulting gas to outside the fuel chamber through the separation layer.

These and other objects, features and advantages of the present invention will become more apparent from the following description taken in conjunction with the accompanying drawings.

Brief description of the drawings

Figure 1 is a wiring diagram useful for explaining the principle of a fuel cell battery using an acidic electrolyte;

Figure 2 is a graph showing the relation between the air pressure and the density of the saturated water vapor in the air;

Figure 3 is a graph showing the relation between the air temperature and air flow rate inside the air chamber of a fuel cell;

Figures 4 and 5 are wiring diagrams, each showing the construction of the air flow rate adjustment of the fuel cell battery in accordance with embodiments of the present invention;

Figures 6, 9, 10 and 11 are perspective views, each showing an embodiment of the present invention; and

Figures 7 and 8 are partial views useful for explaining the details of the embodiment shown in Figure 6.

Description of the preferred embodiments

The principle of the fuel cell battery which uses an alcohol, especially methanol, or formaldehyde as the fuel and an acidic electrolyte such as sulfuric acid or hydrochloric acid is shown in Figure 1 and the reaction formula can be expressed as:

At the fuel electrode 2:

$$CH_3OH+H_2O \rightarrow CO_2+6H^++6e \qquad (5)$$

At the air electrode 3:

$$\frac{3}{2}O_2+6H^++6e \rightarrow 3H_2O \qquad (6)$$

In case of formaldehyde, at the fuel electrode 2:

$$HCHO+H_2O \rightarrow CO_2+4H^++4e \qquad (7)$$

At the air electrode 3;

$$O_2+4H^++4e^- \rightarrow 2H_2 \qquad (8)$$

Here, it is necessary to remove and discharge water generated at the air electrode 3 using the vapor pressure of the air to be sent to the air chamber 6. Three mols of water W are generated on the air electrode 3 per mol of methanol in the quantity per unit cell (e.g., in grams/minute · cell) as expressed by the following formula:

$$W=5.60\times10^{-3}I \text{ (g/min · cell)} \qquad (9)$$

where I(A) is the output current of the battery.

On the other hand, the air flow rate $Q_{NO}$ (the air flow rate under standard conditions) expressed by the following formula is necessary in order to feed the necessary oxygen to the air electrode 3:

$$Q_{NO}=1.734\times10^{-2}I \text{ (l/min · cell)} \qquad (10)$$

(In equation (10), the moisture content in the air is considered zero.)

The relation between the current I and W and between I and $Q_{NO}$ expressed by formulas (9) and (10) also applies to formulas (3) and (4).

The air flow rate $Q_{NW}$ for discharging the resulting water W expressed by formula (7) by use of the vapor pressure of the air to be fed to the air chamber 6 will be now examined.

The density $g_w$ of the water at the saturated vapor pressure in the air at a temperature T (°C) satisfies the relation shown in Figure 2 from the disclosure of the reference ("Rika Nenhyo (1979)", edited by Tokyo Astronomical Observatory, published by Maruzen K.K.) and hence, an experimental formula (9) can be obtained:

$$g_w=8\times10^{-4}\times10^{-0.3T^{0.5}} \text{ (g/l)} \qquad (11)$$

(Temperature range is from 20°C to 100°C)

Accordingly, the air flow rate $Q_{NW}$ (under the standard conditions) can be expressed by the following formula (12) from formulas (9) and (11):

$$Q_{NW}=W/g_w=7\times10^{-0.3T^{0.5}}XI \text{(l/min · cell)} \qquad (12)$$

wherein T represents a gas temperature (°C) at an outlet of an oxidant chamber.

The water generated on the air electrode 3 can be completely removed and discharged effectively by feeding an amount of air exceeding the air flow rate $Q_{NW}$ expressed by formula (12) to the air chamber 6.

In practice, however, the air expressed by formula (10) is required for the power generation. Hence, the optimal air flow rate $Q_N$ to be fed to the air chamber 6 in order to operate the battery under the high performance conditions will be examined.

If the temperature T is low (80.5°C or below), oxygen necessary for the oxidation reaction is consumed in addition to the $Q_{NW}$ expressed by the formula (12). Hence, the air to supplement this consumption must be fed to the air chamber 6. In this case, $Q_N$ can be expressed by the formula:

$$Q_N=Q_{NW}+Q_{NO}/5 \quad (13)$$

If the temperature is high (80.5°C or above), the vapor pressure becomes predominant and air necessary for the oxidation reaction may be supplied, giving the formula:

$$Q_N=Q_{NO} \quad (14)$$

The above relations are shown in Figure 3 wherein, $Q_N/I$ is the value represented by the solid line.

It is apparent from Figure 3 that the moisture content in the air to be fed has a relatively small effect on cell performance below about 60°C, because the necessary amount of air is much larger than $Q_{NO/I}$.

On the other hand, the apparent moisture content (relative humidity) in the air in the oxidant chamber becomes small as the temperature of the air in the oxidant chamber increases. For example, when an air of 90% moisture content (density: about 0.03 g/l) is fed to the air chamber at 80°C, it is rapidly heated up to 80°C. As a result, the relative humidity of the fed air becomes 10% (density about 0.3 g/l). Accordingly, the effect of moisture content on cell performance is substantially small at a temperature above about 60°C.

Accordingly, the air flow rate necessary for battery operation is one that exceeds $Q_N$ and is expressed by formulas (13) and (14).

It can be understood from the above-mentioned examination that in a fuel cell battery which uses an acidic electrolyte and is to be operated at a low temperature of 100°C or below, the battery can be operated with a high level of performance by setting the air flow rate to be fed to the air chamber so as to satisfy the following formula (15):

$$Q_N+5\times10^{-0.3T^{0.5}}\times I(l/min \cdot cell) \quad (15)$$

The flow rate of air represented by formula (15) is the minimum value. Accordingly, the air must be fed to the air chamber is in an amount larger than the amount determined by formula (15). Since the amount of air calculated by formula (15) is an amount of air whose moisture content is zero. Therefore, in practical cases (i.e. the moisture content may change from about 10% to about 90%), the amount of air to be fed should be increased in accordance with the moisture content.

The study by the inventors has revealed that the quantity of oxygen-containing gas to be fed to the oxidant electrode should preferably be within the range expressed by the following equation:

$$Q_N=(6\sim20)\times10^{-0.3T^{0.5}}\times I(l/min \cdot cell) \quad (14)$$

By controlling the quantity to the range mentioned above, the state of wetness or the amount of water on the oxidant electrode is controlled adequately. When the $Q_N$ exceeds

$$20\times10^{-0.3T^{0.5}}\times I(l/min \cdot cell),$$

the oxidant electrode is too dry. When the quantity $Q_N$ is less than

$$6\times10^{-0.3T^{0.5}}\times I(l/min \cdot cell),$$

the oxidant electrode is too wet. The most preferable range of $Q_N$ is from

$$(8 \text{ to } 15)\times10^{-0.3T^{0.5}}\times I(l/min \cdot cell).$$

Hereinafter, an embodiment of the present invention will be described with reference to Figure 4. In Figure 4, the fuel cell comprises oxidant electrode 3 consisting of porous, water-repellent graphite carrier and catalytic platinum carried thereon, fuel electrode 2 made of the same material as that of oxidant electrode, and a diluted sulfuric acid layer 4 disposed between the electrodes. The materials and methods of producing the electrodes have been well known in the field of fuel cells. As catalysts for electrodes there have been known various metals such as platinum group metals and combinations of platinum group metals and other metals such as tin, ruthenium. Figure 4 shows the case in which the fuel cell battery is operated at a predetermined temperature. A voltage taken out from part of the wiring connected to a load 9 is applied to the terminal of a blower 7 to provide a terminal voltage for the blower 7 corresponding to a load current. In this case, the air flow rate expressed by formula (15) can be easily obtained by adjusting the terminal voltage of the blower to match the load current by means of an adjuster 8. It is also possible to operate the blower 7 by a voltage circuit (not shown) operated by a voltage signal from the adjuster 8, instead of directly connecting the adjuster to the voltage terminal of the blower 7. According to this system, the air flow rate can be controlled in accordance with changes in the load at a constant temperature using a control circuit (not shown).

The control circuit may comprise a temperature sensor for the gas temperature at an outlet of the oxidant chamber and a controller for controlling a terminal voltage of blower 7 in response to the signal of the temperature sensor.

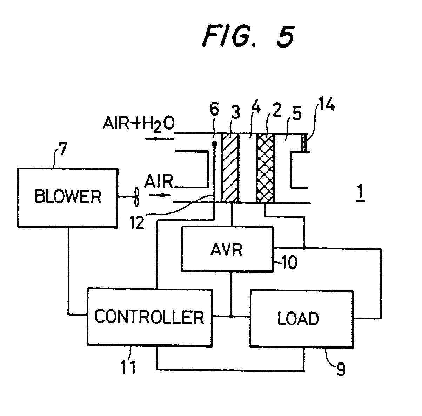

Figure 5 shows the circuit construction of another embodiment of the present invention which makes it possible to control the air flow rate $Q_N$ in accordance with formula (15) even when the operating temperature T of the battery and the battery current I change.

The circuit includes a constant voltage circuit, AVR 10 (three terminal-positive voltage regulator, MC-78M12AC, manufactured by Motorola connected to the load 9 and a control circuit, controller 11 which is connected to the constant voltage circuit 10 and to the load 9 and can control

the temperature (thermocouple 12) inside the air chamber and the terminal voltage of the blower 7 with respect to changes in the load current.

The control circuit 11 comprises a temperature sensor and a computing means which produces a signal as an output for controlling the blower speed, in response to the sensor signal.

The sensor signal is first compared with predetermined levels by a comparator so that a necessary level can be determined. In accordance with the level signal the output signal for controlling the blower speed is produced.

If this system is employed, the battery operation can be carried out very efficiently even when the load shows a drastic change. Though the control circuit must be additionally disposed, the increase in the space due to the control circuit is extremely small compared with the space required for the apparatus as a whole.

If the air flow rate exceeds the value expressed by formula (15), extremely fine control is not necessary and in practice the number of terminal voltages of the blower 7 can be reduced to a few and sufficiently accomplish the object of control.

In accordance with the present invention, the water generated on the air electrode can be efficiently discharged, the oxidation reaction proceeds effectively and the battery can be operated with a high level of performance for extended periods of time. Moreover, the control of the air flow rate required to discharge the water on the air electrode can be effected simply and easily.

**Claims**

1. A method of operating a fuel cell battery having an acidic electrolyte and in which the battery reaction is carried out at 80°C or below by feeding an oxygen-containing gas to an oxidant electrode (3; 23) and a fuel to a fuel electrode (2; 22), including the step of controlling the vapor pressure and flow rate of the oxygen-containing gas fed to the oxidant electrode such that said oxygen-containing gas is fed in a quantity sufficient to remove the water, formed on the oxidant electrode (3; 23) by the reaction between the fuel and the oxidant, from the oxidant electrode, characterized in that the flow rate $Q_N$ (calculated under the standard state) of said oxygen-containing gas is maintained within the range of the quantity expressed by the following formula, where I is the battery current (A) per unit cell of said fuel cell battery and T is the temperature (°C) of the gas at the outlet of the oxidant chamber (6; 27):

$$Q_N=(6 \text{ to } 20)\times 10^{-0.3T^{0.5}}\times I(\text{l/min}\cdot\text{cell}),$$

whereby a gas flow rate necessary for discharging said water is maintained.

2. The method of claim 1, characterized in that the terminal voltage of a blower (7) is controlled in accordance with the battery output current I in order to obtain the necessary flow rate of said oxygen-containing gas.

3. The method of claim 1 or claim 2, characterized in that said flow rate is maintained within said range by use of a blower for passing an oxygen containing gas through the oxidant chamber (6) of said battery, the speed of said blower being controlled by a control circuit (11) in response to the load current and the output of a temperature sensor (12) provided in said oxidant chamber (6) for sensing the temperature of said oxygen containing gas.

**Patentansprüche**

1. Verfahren zum Betreiben einer Brennstoffzellenbatterie mit einem säurehaltigen Elektrolyten, wobei die Batteriereaktion bei 80°C oder darunter ausgeführt wird, indem ein Sauerstoff enthaltendes Gas einer Oxidationselektrode (3; 23) und Brennstoff einer Brennstoffelektrode (2, 22) zugeführt wird, mit dem Verfahrensschritt des Steuerns des Dampfdruckes und der Fließgeschwindigkeit des Sauerstoff enthaltenden, der Oxidationselektrode zugeführten Gases derart, daß das Sauerstoff enthaltende Gas in einer solchen Menge zugeführt wird, die ausreicht, das auf der Oxidationselektrode (3; 23) durch die Reaktion zwischen dem Brennstoff und dem Oxidationsmittel gebildete Wasser von der Oxidationselektrode zu entfernen, dadurch gekennzeichnet, daß die Fließgeschwindigkeit $Q_N$ (berechnet im Standardzustand) des Sauerstoff enthaltenden Gases in dem durch die folgende Formel gegebenen Größenbereich gehalten wird, wobei I der Batteriestrom (A) je Einheitszelle der Brennstoffzellenbatterie und T die Temperatur (°C) des Gases am Auslaß der Oxidationskammer (6; 27) ist:

$$Q_N=(6 \text{ bis } 20)\times 10^{-0{,}3T^{0{,}5}}\times I(\text{l/min}\cdot\text{Zelle})$$

wobei eine zum Abführen des Wassers notwendige Gas-Fließgeschwindigkeit aufrecht erhalten wird.

2. Verfahren nach Anspruch 1, dadurch gekennzeichnet, daß die Anschlußspannung eines Gebläses (7) entsprechend dem Batterieausgangsstrom I gesteuert wird, um die notwendige Fließgeschwindigkeit des Sauerstoff enthaltenden Gases zu erreichen.

3. Verfahren nach Anspruch 1 oder 2, dadurch gekennzeichnet, daß die Fließgeschwindigkeit in dem genannten Bereich gehalten wird durch Einsatz eines Gebläses zum Leiten eines Sauerstoff enthaltenden Gases durch die Oxidationskammer (6) der Batterie, wobei die Geschwindigkeit des Gebläses durch eine Steuerschaltung (11) entsprechend dem Laststrom und den Ausgang eines Temperatursensors gesteuert wird, der in der Oxidationskammer (6) zum Abtasten der Temperatur des Sauerstoff enthaltenden Gases vorgesehen ist.

**Revendications**

1. Procédé pour faire fonctionner une pile à combustible comportant un électrolyte acide et dans lequel la réaction de la pile est effectuée à 80°C ou moins par envoi d'un gaz contenant de l'oxygène à une électrode d'agent oxydant (3; 23) et un combustible à une électrode de combustible (2; 22), incluant la phase opératoire consistant à commander la pression de vapeur et le débit du gaz contenant de l'oxygène envoyé à l'électrode d'agent oxydant de manière que ledit gaz contenant de l'oxygène soit envoyé en une quantité suffisante pour éliminer l'eau formée sur l'électrode d'agent oxydant (3; 23) par suite de la réaction entre le combustible et l'agent oxydant, à partir de l'électrode d'agent oxydant, caractérisé en ce que le débit $Q_N$ (calculé dans l'état standard) dudit gaz contenant de l'oxygène est maintenu dans la plage de la valeur exprimée par la formule suivante, dans laquelle I est le courant (A) de la pile pour chaque cellule unité de ladite pile à combustible et T est la température (°C) du gaz à la sortie de la chambre (6; 27) contenant l'agent oxydant:

$$Q_N=(6 \text{ à } 20)\times 10^{-0,3T^{0,5}}\times I(\text{l/mn} \cdot \text{cellule}),$$

ce qui a pour effet qu'un débit de gaz nécessaire pour évacuer ladite eau est maintenu.

2. Procédé selon la revendication 1, caractérisé en ce que la tension aux bornes d'un ventilateur (7) est réglée en fonction du courant I de sortie de la pile de manière à obtenir le débit nécessaire dudit gaz contenant de l'oxygène.

3. Procédé selon la revendication 1 ou 2, caractérisé en ce que ledit débit est maintenu dans ladite plage grâce à l'utilisation d'un ventilateur servant à faire passer un gaz contenant de l'oxygène à travers la chambre (6) contenant l'agent oxydant de ladite pile, la vitesse dudit ventilateur étant réglée au moyen d'un circuit de commande (11) en réponse à la charge de courant et au signal de sortie d'un capteur de température (12) prévu dans ladite chambre (6) contenant l'agent oxydant, pour la détection de la température dudit gaz contenant de l'oxygène.

FIG. 1

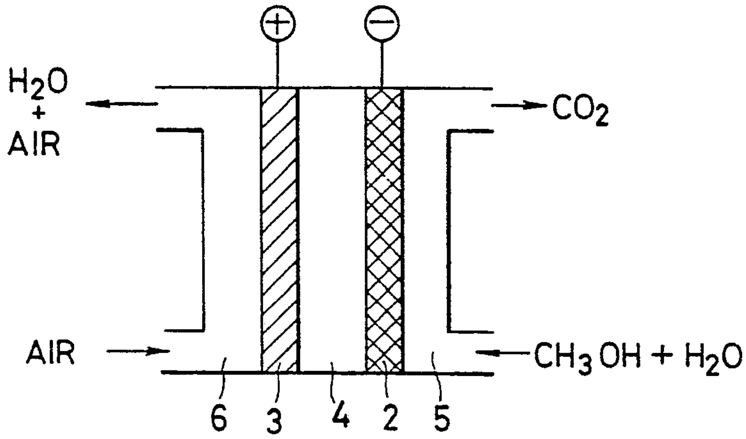
H2O
+
AIR
CO2
AIR
CH3OH + H2O
6
3
4
2
5

FIG. 2

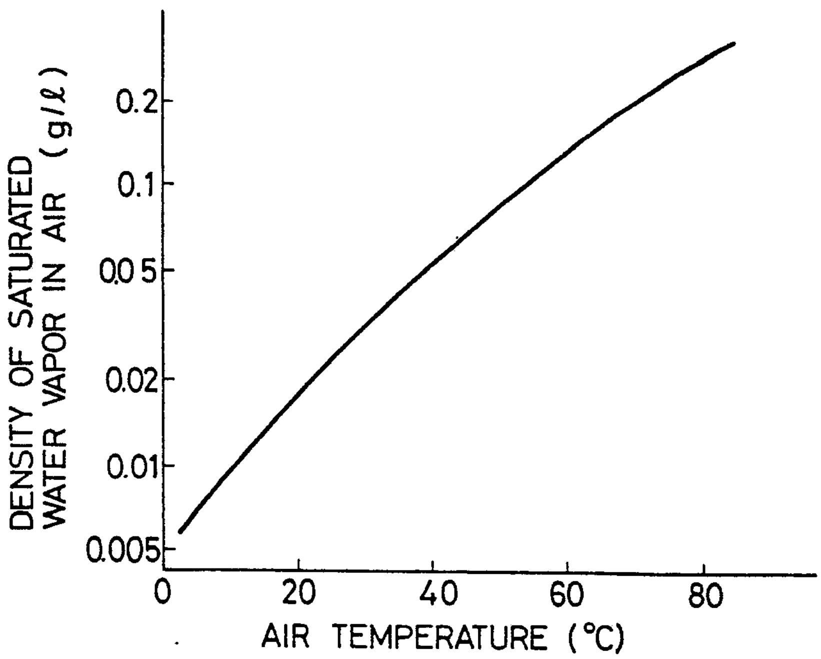
DENSITY OF SATURATED WATER VAPOR IN AIR (g/ℓ)
0.2
0.1
0.05
0.02
0.01
0.005
0
20
40
60
80
AIR TEMPERATURE (°C)

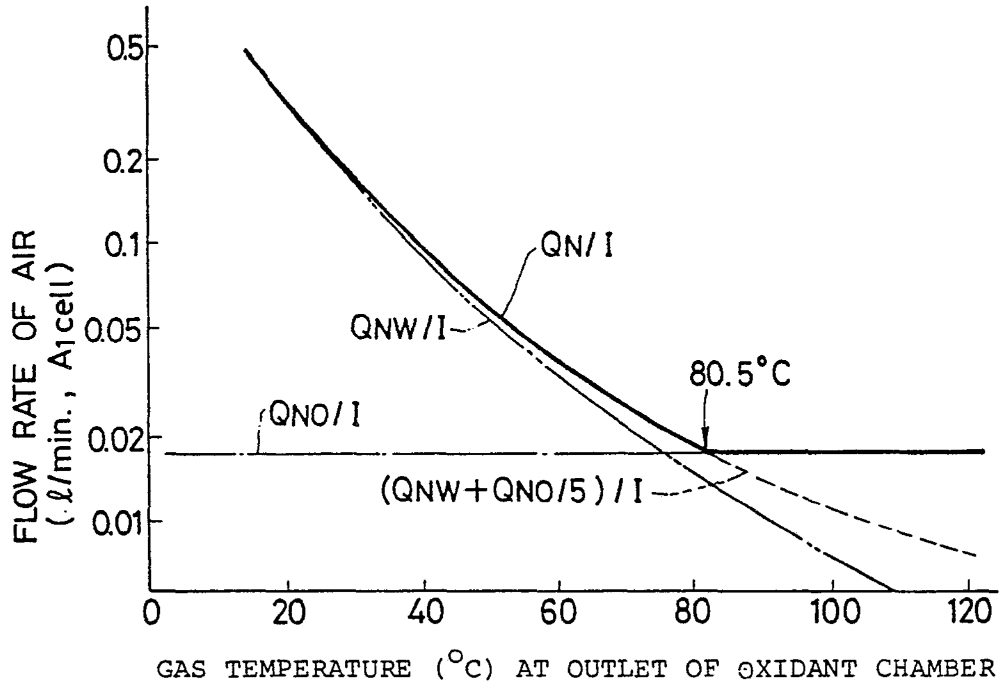
FLOW RATE OF AIR (ℓ/min., A1cell)
0.5
0.2
0.1
0.05
0.02
0.01
QN/I
QNW/I
80.5°C
QNO/I
(QNW+QNO/5)/I
0
20
40
60
80
100
120
GAS TEMPERATURE (°C) AT OUTLET OF OXIDANT CHAMBER

*FIG. 3*

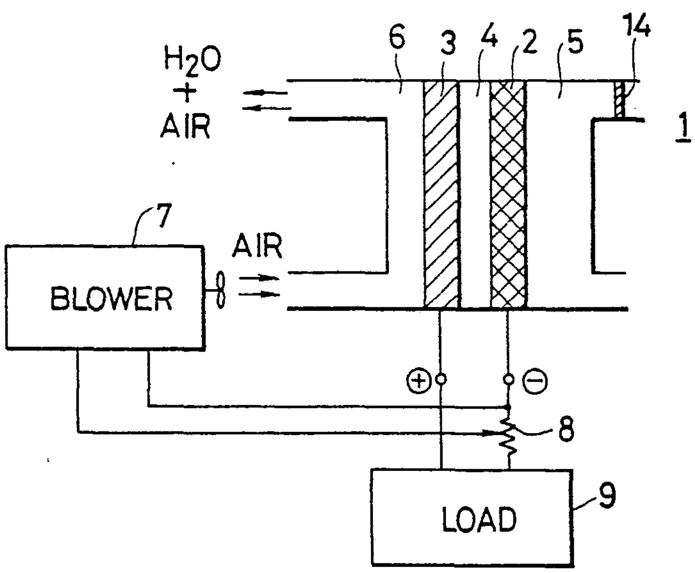
$H_2O$ + AIR
6
3
4
2
5
14
1
7
BLOWER
AIR
⊕
⊖
8
LOAD
9

*FIG. 4*

FIG. 5